# EUROPÄISCHE PATENTSCHRIFT

(11) **EP 2 772 372 B1**
(45) Veröffentlichungstag und Bekanntmachung des Hinweises auf die Patenterteilung: **15.01.2020**
(21) Anmeldenummer: 14155689.4
(22) Anmeldetag: 19.02.2014
(51) Int. Cl.: B60G 9/00, B60G 7/00

(54) **FAHRWERK FÜR EIN NUTZFAHRZEUG UND ACHSKÖRPER**
SUSPENSION FOR A COMMERCIAL VEHICLE AND AXLE BODY
CHÂSSIS POUR UN VÉHICULE UTILITAIRE ET CORPS D'ESSIEU

(30) Priorität: 28.02.2013 DE 102013003301
(43) Veröffentlichungstag der Anmeldung: 03.09.2014
(73) Patentinhaber: BPW Bergische Achsen KG, 51674 Wiehl (DE)
(72) Erfinder: Neumann, Arthur, 51597 Morsbach (DE)
(74) Vertreter: Bungartz Christophersen Partnerschaft mbB Patentanwälte

(56) Entgegenhaltungen:
- WO-A1-2008/104396
- WO-A1-2010/095924
- WO-A1-2011/059312
- DE-A1-102008 061 190
- DE-U1- 29 615 286
- US-A- 4 220 277
- US-A1- 2012 080 862

## Beschreibung

Die Erfindung betrifft ein Fahrwerk für ein Nutzfahrzeug mit einem Achskörper, der in einem Befestigungsabschnitt mit einem Achslenker verbunden ist, dessen eines Ende an dem Fahrzeugrahmen des Nutzfahrzeugs schwenkbar gelagert, und dessen anderes Ende über eine Luftfeder gegen den Fahrzeugrahmen abgestützt ist, wobei der Achskörper in seinem Befestigungsabschnitt mit zumindest zwei Stützflächen versehen und mit diesen Stützflächen gegen den Achslenker abgestützt ist, und der Achskörper im Wesentlichen als ein Rundrohr ausgebildet ist, wobei jede Stützfläche eine Verformung der Rundrohrwandung ist, und in Umfangsrichtung des Rundrohrs
- eine erste Stützfläche auf einem ersten Umfangssegment des Rundrohrs,
- eine zweite Stützfläche auf einem zweiten Umfangssegment des Rundrohrs,
- eine dritte Stützfläche auf einem dritten Umfangssegment des Rundrohrs,
- eine vierte Stützfläche auf einem vierten Umfangssegment des Rundrohrs
angeordnet sind, und wobei das erste und dritte Umfangssegment und das zweite und vierte Umfangssegment auf einander abgewandten Umfangsabschnitten angeordnet sind.

Die Erfindung betrifft ferner einen Achskörper, welcher Verwendung in einem solchen Fahrwerk finden kann.

Bei einem Fahrwerk und einem Achskörper nach der WO 2010/066232 A1 erfolgt die Befestigung des als Vierkantrohr ausgebildeten Achskörpers in jedem der beiden Achslenker durch Klemmen zwischen einem in Fahrtrichtung vorderen und einem in Fahrtrichtung hinteren Lenkerabschnitt. Zur Übertragung der Klemmkräfte sind die Lenkerabschnitte jeweils mit einer Schale versehen, an deren Innenseiten es zur Abstützung an dem Achskörper kommt. Infolge des quadratischen Achskörperquerschnitts werden auch Momente, wie sie z. B. während des Bremsens auftreten, von der Achseinbindung sicher aufgenommen. Bekannt sind, in vielerlei Ausführungsformen, auch bereits Fahrwerke unter Verwendung eines als Rundrohr gestalteten Achskörpers. An die Achseinbindung sind in diesem Fall erhöhte Anforderungen gestellt, um Momente und insbesondere Bremsmomente sicher vom Achsrohr auf die Achslenker übertragen zu können. Grundsätzlich haben Achsrohre mit einem runden Querschnitt Preisvorteile gegenüber Vierkantrohren, da letztere in der Regel aus Halbschalen zusammengeschweißt werden müssen.

Aus der DE 296 15 286 U1, die den Oberbegriff der Ansprüche 1 und 7 offenbart, ist ein Nutzfahrzeugfahrwerk unter Verwendung eines unrunden Achsrohrs als Achskörper bekannt. Durch Verformung eines runden Achsrohrs verfügt dieses über zumindest zwei ebene Wandabschnitte, mit denen das Achsrohr gegen entsprechend gestaltete Flächen des Achslenkers abgestützt ist. Die Verbindung der Teile erfolgt mittels Spannbügeln.

Aus der WO 2011/059312 A1 ist ein Nutzfahrzeugfahrwerk bekannt, bei dem ein überwiegend rundes Achsrohr zwischen einem vorderen Lenkerabschnitt und einem hinteren Lenkerabschnitt eines Achslenkers eingespannt ist. Um ein Verdrehen des Achsrohrs innerhalb der so erzielten Einspannung zu verhindern, befindet sich am Achslenker ein zusätzliches formschlüssiges Element, welches in eine entsprechende Formschluss-Struktur des Achsrohrs angreift, z.B. in eine Nut in der Außenwandung des Achsrohrs.

Aus der US 2012/0080862 A1 ist es für die Verbindung zwischen einem im Wesentlichen runden Achsrohr und einem Achslenker bekannt, um das Achsrohr herum eine zusätzliche, hülsenförmige Manschette anzuordnen. Mit einem geeigneten Werkzeug werden die Manschette und das Achsrohr gemeinsam verformt, wodurch das Achsrohr auf diesem Längsabschnitt, ebenso wie die Manschette, eine unrunde Form erhält, die zu einem ausgeprägten Formschluss zwischen Manschette und Achsrohr führt, so dass diese beiden Teile sich im Fahrbetrieb nicht zueinander verdrehen können. Die Kombination aus Achsrohr und der umgebenden Manschette wird sodann in einer halbrunden Ausnehmung angeordnet, mit der der Achslenker versehen ist. Spannbügel sichern die Teile zueinander.

Der Erfindung liegt die **Aufgabe** zugrunde, durch Einsatz kostengünstiger Achsrohre zu insgesamt günstigen Herstellkosten für den Achskörper und das den Achskörper beinhaltende Fahrwerk zu gelangen.

Zur **Lösung** dieser Aufgabe wird ein Fahrwerk für ein Nutzfahrzeug mit den Merkmalen des Anspruchs 1 sowie ein Achskörper mit den Merkmalen des Anspruchs 7 vorgeschlagen.

Von Vorteil ist hierbei die Verwendung eines preiswert herstellbaren Achskörpers aus Rundrohr. Um gleichwohl hohe Momente und insbesondere Bremsmomente vom Achskörper auf den jeweiligen Achslenker übertragen zu können, ist das Rundrohr an der Achseinbindung, also auf dem Befestigungsabschnitt mit dem Achslenker unter Ausbildung von Stützbereichen verformt. Diese Stützbereiche sind daher verformte Bereiche der ursprünglich kreisrunden Rohrwandung.

Der Achskörper ist daher auf dem größten Teil seiner Länge ein Rundrohr von kreisförmigem Achsquerschnitt. Auf dem Befestigungsabschnitt jedoch ist infolge zuvor an dem Rundrohr durchgeführter Verformungsprozesse der Achsquerschnitt nicht mehr kreisförmig, sondern kantig unter Ausbildung jener Stützflächen, an denen der Achskörper im Achslenker eingeklemmt ist.

Bevorzugte Ausgestaltungen des erfindungsgemäßen Fahrwerks sowie des erfindungsgemäßen Achskörpers sind in den jeweiligen Unteransprüchen angegeben.

Weitere Vorteile und Einzelheiten ergeben sich aus der nachfolgenden Beschreibung von Ausführungsbeispielen, welche auf der Zeichnung dargestellt sind. Darin zeigen im Einzelnen
- Fig. 1: in einer Seitenansicht ein Nutzfahrzeug-Fahrwerk in einer ersten Ausführungsform;
- Fig. 2: in einer Seitenansicht ein Nutzfahrzeug-Fahrwerk in einer zweiten Ausführungsform;
- Fig. 3: in einer Seitenansicht ein Nutzfahrzeug-Fahrwerk in einer dritten Ausführungsform;
- Fig. 4: eine vergrößerte Darstellung des in Fig. 3 mit IV bezeichneten Befestigungsbereichs des Achskörpers im Achslenker;
- Fig. 5: eine Teilansicht des Achskörpers, wobei vor allem der Befestigungsabschnitt wiedergegeben ist;
- Fig. 6: den Achsrohrquerschnitt im Befestigungsabschnitt des Achskörpers entsprechend der in Fig. 5 eingezeichneten Schnittebene VI-VI;
- Fig. 7: eine Teilansicht des Achskörpers, wobei vor allem der Befestigungsabschnitt wiedergegeben ist;
- Fig. 8: den Achsrohrquerschnitt im Befestigungsabschnitt des Achskörpers entsprechend der in Fig. 7 eingezeichneten Schnittebene VIII-VIII und
- Fig. 9: eine Stirnansicht einer Pressvorrichtung für ein Umformverfahren.

Die auf der Zeichnung dargestellte Achsaufhängung findet Anwendung vor allem für Fahrzeugachsen mit durchgehendem Achskörper. Derartige Fahrzeugachsen kommen vor allem bei Nutzfahrzeugen und insbesondere bei Lkw-Anhängern und - Aufliegern zum Einsatz, da die Achsen für hohe Transportgewichte und Belastungen im Straßenbetrieb ausgelegt sind.

Unter Längsträgern eines hier nicht näher dargestellten Fahrwerks 1 ist auf jeder Fahrzeugseite eine Lenkerstütze 1A befestigt. Diese nimmt ein Schwenklager 1B für die Achsaufhängung auf. Zur Führung des von einer Fahrzeugseite zur anderen Fahrzeugseite starr durchgehenden Achskörpers 2 dient auf jeder Fahrzeugseite ein Achslenker 5. Der Achslenker 5 ist an seinem vorderen Ende mit einem einstückig angegossenen Lenkerauge versehen, welches Bestandteil des Schwenklagers 1B ist, um so mittels eines Bolzens den Achslenker 5 vertikal schwenkbar an der Lenkerstütze 1A zu halten.

In Fahrtrichtung hinten ist an dem Achslenker 5 eine Auflagefläche 6A für eine Luftfeder 6 ausgebildet. Die Luftfeder 6 stützt sich mit einer oberen Abschlussplatte von unten gegen den entsprechenden Längsträger des Fahrwerks 1 ab.

Der Achslenker 5 ist zweiteilig gestaltet. Er setzt sich zusammen aus einem in Fahrtrichtung vorderen Lenkerabschnitt 51 sowie einem in Fahrtrichtung hinteren Lenkerabschnitt 52. An dem hinteren Lenkerabschnitt 52 ist die Auflagefläche 6A für die Luftfeder 6 angeformt.

Der vordere Lenkerabschnitt 51 erstreckt sich von dem Lagerauge des Schwenklagers 1B bis zu dem Achskörper 2. Er läuft mit seinem hinteren Ende nach schräg unten aus. Der hintere Lenkerabschnitt 52 erstreckt sich von dem Achskörper 2 bis zu der Auflagefläche für die Luftfeder 6. Er läuft mit seinem vorderen Ende nach schräg oben aus. Die Zweiteiligkeit des Achslenkers 5 ist von Vorteil, da durch Auswahl von Lenkerabschnitten 51, 52 in geeigneter Größe die fahrzeugspezifischen Abstände zwischen dem Schwenklager, dem Achskörper 2 und der Luftfeder 6 individuell, d. h. kundenspezifisch, realisierbar sind.

Der vordere Lenkerabschnitt 51 besteht aus Metallguss, vorzugsweise aus einem Sphärostahlguss. Vorzugsweise besteht auch der hintere Lenkerabschnitt 52 aus Metallguss, vorzugsweise einem Sphärostahlguss.

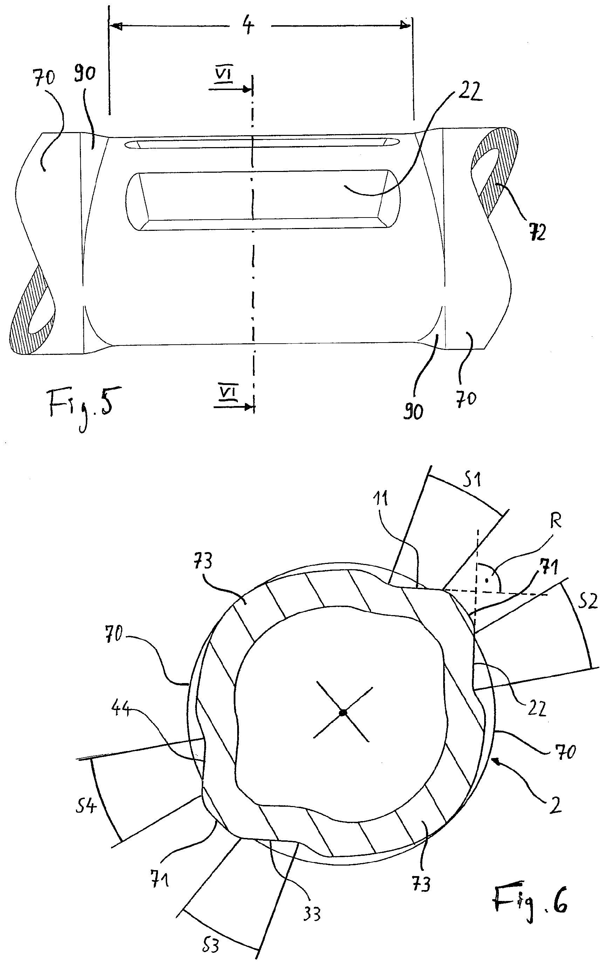

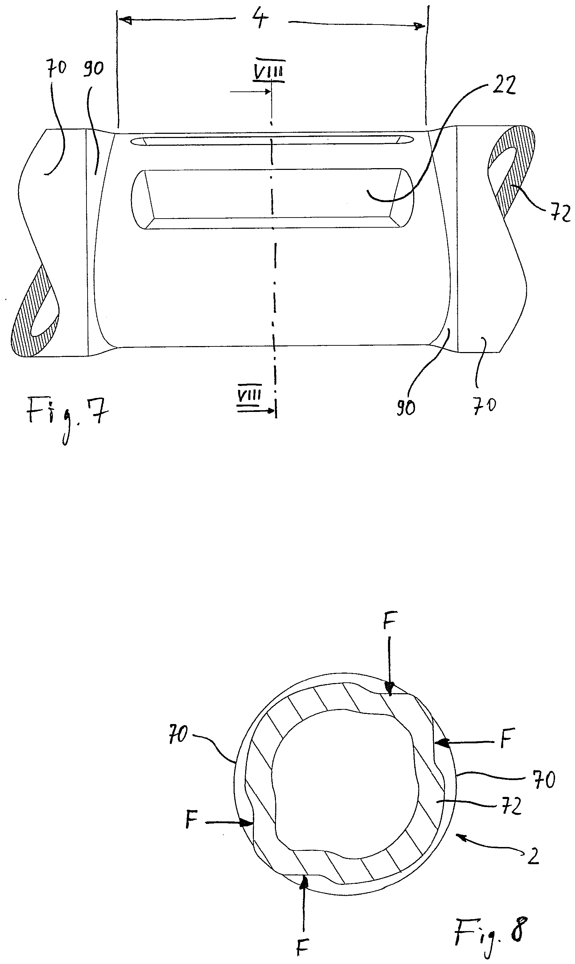

Der Achskörper 2 ist auf dem größten Teil seiner Länge ein Rundrohr von kreisförmigem Achsquerschnitt. Auf einem Befestigungsabschnitt 4 jedoch (Fig. 5, Fig. 7)) ist infolge von dort an dem Rundrohr durchgeführten Verformungsprozessen der Achsquerschnitt nicht mehr kreisförmig, sondern kantig unter Ausbildung flacher Stützflächen, was im Folgenden noch näher beschrieben wird.

Außerdem kann das Rundrohr 2 auch an seinen beiden Enden infolge dort durchgeführter Verformungsprozesse unrunde Querschnitte erhalten, z. B. um dort einen das Fahrzeugrad lagernden Achsschenkel oder einen Bremsträger besser befestigen zu können.

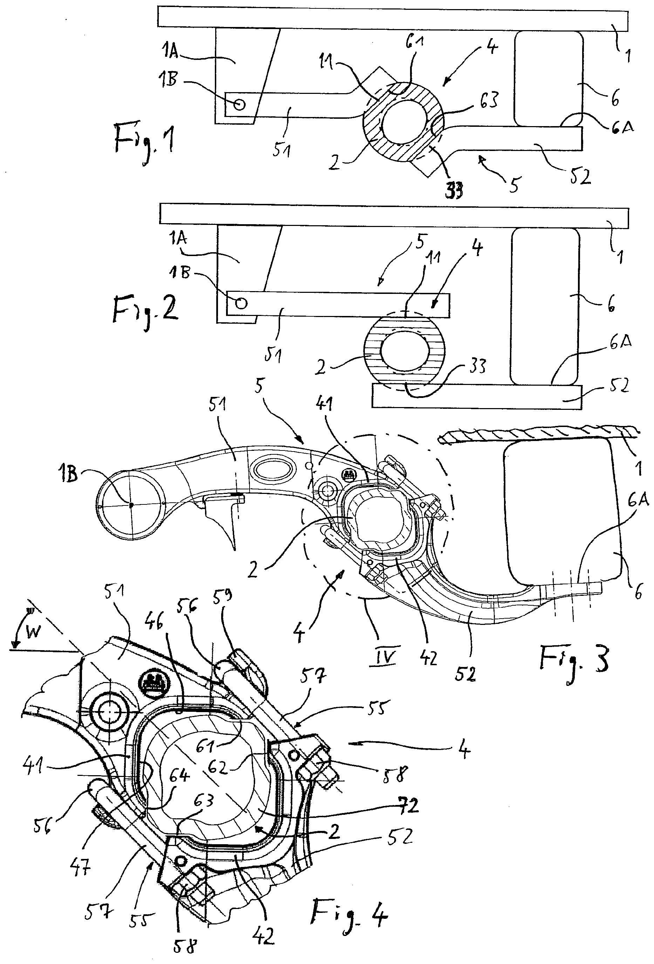

Bei den Ausführungsformen nach Fig. 1 und Fig. 2 ist die auf den Befestigungsabschnitt 4 beschränkte Verformung des Rundrohrs 2 dergestalt, dass durch partielles Eindrücken zweier einander abgewandter Umfangsabschnitte des Rundrohrs zwei flache Stützflächen 11, 33 entstehen. Die flache Stützfläche 11 liegt gegen eine entsprechende Gegenstützfläche 61 am vorderen Lenkerabschnitt 51, und die flache Stützfläche 33 gegen die Gegenstützfläche 63 am hinteren Lenkerabschnitt 52 an.

Gemeinsam ist allen Ausführungsformen, dass auf dem Befestigungsabschnitt 4, der nur einen kleinen Teil der Gesamtlänge des Achskörpers 2 ausmacht, ein im wesentlichen formschlüssiges Einklemmen des Achsrohrs zwischen den beiden Lenkerabschnitten 51, 52 erfolgt.

Bei den Ausführungsformen nach den Figuren 3 - 8 ist der vordere Lenkerabschnitt 51 mit einer Schale 41, und auch der hintere Lenkerabschnitt 52 mit einer Schale 42 versehen. Die Schalen 41, 42 sind einstückiger Bestandteil der gegossenen Lenkerabschnitte 51, 52. Für einen optimalen Kraftverlauf im Achslenker ist die Gussgestaltung so, dass der Lenkerabschnitt 51 nach schräg unten auf die Schale 41, und der Lenkerabschnitt 52 nach schräg oben auf die Schale 42 stößt.

Die Schalen 41, 42 weisen, dem Achskörper 2 zugewandt, jeweils eine erste Innenseite 46 und eine gemeinsam mit der ersten Innenseite einen Eckwinkel von ca. 90° bildende zweite Innenseite 47 auf. Die Abstützung der Lenkerabschnitte 51, 52 gegen den Achskörper 2 erfolgt nicht auf der ganzen Fläche der beiden Innenseiten 46, 47, sondern nur in einer dem Eckwinkel abgewandten Randzone der jeweiligen Innenseite. In dieser Randzone befindet sich jeweils ein sich in Längsrichtung des Achskörpers 2 erstreckender Vorsprung ähnlich einer Leiste. Der Vorsprung bildet eine Stützfläche 61, 62, 63, 64, und ausschließlich an dieser Stützfläche 61, 62, 63, 64 findet ein Kontakt zwischen dem Achskörper 2 und dem Achslenker 5 statt.

Mit den vorzugsweise flach ausgebildeten Stützflächen 61, 62, 63, 64 an den Innenseiten der Schalen 41, 42 stützen sich die Lenkerabschnitte 51, 52 gegen Stützflächen 11, 22, 33, 44 am Achskörper 2 ab. Die Stützflächen 11, 22, 33, 44 sind durch partielles Eindrücken des ursprünglich kreisrunden Achskörpers 2 in einem Umformprozess gebildet. Hierzu werden in einem Stauchwerkzeug Teile der Rundrohrwandung nach innen eingedrückt.

Die erforderliche Klemmkraft wird durch Zugelemente 57 erreicht, welche die eine Schale 41 unter Zwischenlage des Befestigungsabschnitts 4 des Achskörpers 2 gegen die andere Schale 42 verspannen. Diese Verspannung erfolgt unter einem schrägen Winkel W zur Horizontalen.

Jede Schale 41, 42 weist, in Achsrichtung gesehen, eine Länge auf, die größer ist, als die sonstige Breite der Lenkerabschnitte 51, 52. Auf diese Weise ergibt sich in Achsrichtung eine lange Abstützung der Schalen 41, 42 an dem Befestigungsabschnitt 4. Es kommt beim Anziehen der Zugelemente 57 unter Erhöhung der Klemmspannung zu einem Klemmen der ähnlich einer Leiste geformten Gegenstützflächen 61, 62, 63, 64 der Schalen an den Stützflächen 11, 22, 33, 44 des Achskörpers.

Bei montierter Achsaufhängung stützt sich die winkelförmige Schale 41 des vorderen Lenkerabschnitts 51 zugleich von oben und von vorne gegen den Achskörper 2 ab. Hingegen stützt sich die winkelförmige Schale 42 des hinteren Lenkerabschnitts 52 zugleich von unten und von hinten gegen den Achskörper ab. Die Innenseiten 46, 47 beider Schalen zusammen umschließen den Achskörper 2 nahezu über den gesamten Umfang. Es verbleibt also nur ein kleiner nicht umschlossener Umfangsabstand zwischen den Schalen. Dieser Umfangsabstand ist erforderlich, damit es unter keinen Umständen und auch nicht bei starker Torsionsbelastung der Achsaufhängung zu einer Berührung der Schalen 41, 42 kommt.

Die für das Klemmen des Befestigungsabschnitts 4 erforderliche Klemmkraft wird durch demontierbare Zugelemente erreicht, welche die Schale des vorderen Lenkerabschnitts 51 unter Zwischenlage des Achskörpers 2 gegen die Schale des hinteren Lenkerabschnitts 52 verspannen. Diese Verspannung erfolgt unter dem schrägen Winkel W zur Horizontalen. Sie erfolgt mittels zweier Gewindebügel 55, bestehend jeweils aus einem gebogenen Bügelabschnitt 56 und zwei geraden, zueinander parallelen Abschnitten 57, welche als die eigentlichen Zugelemente die Zugkraft übertragen. Im Bereich ihrer freien Enden sind die Abschnitte 57 mit Außengewinden versehen, auf die jeweils eine Gewindemutter 58 aufgeschraubt ist.

Der Bügelabschnitt 56 jedes Gewindebügels 55 ist um ein an dem vorderen Lenkerabschnitt 51 angeformtes Widerlager 59 herumgeführt. Bei dem Widerlager 59 handelt es sich um eine einstückig an dem Lenkerabschnitt 51 angeformte Nase, die mit einer zu der Biegung des Bügelabschnitts 56 korrespondierenden Rille versehen ist.

Aufgrund der Anordnung der Gewindebügel 55 wird erreicht, dass sich im Bereich der Achseinbindung die Zugelemente 57 längs, d. h. parallel, des Verlaufs des Achslenkers 5 erstrecken, und sich die Enden der Zugelemente 57 mit den dort aufgeschraubten Muttern 58 nach hinten und schräg unten erstrecken. So wird eine optimal geschützte Lage der Zugelemente erreicht, da es selbst im Fall einer extremen Einfederung des Achslenkers 5 zu keinem Kontakt mit den oberhalb angeordneten Chassisteilen des Fahrzeugs kommt.

Die Fig. 6 zeigt einen Schnitt durch den Befestigungsabschnitt 4 des Achsrohrs entsprechend der in Fig. 5 wiedergegebenen Schnittebene VI-VI. Erkennbar ist, dass der Achskörper in dem Befestigungsabschnitt 4 nicht eine runde Mantelfläche 70 wie auf den anderen Achsrohrabschnitten aufweist, sondern einen Achsrohrquerschnitt aus teilweise flachen und teilweise gebogenen Flächen. Durch Verformungsprozesse an dem ursprünglich insgesamt kreisrunden Achsrohr haben sich vier Stützflächen 11, 22, 33, 44 ausgebildet, die jeweils für sich flach und eben gestaltet sind. Insbesondere handelt es sich bei den Stützflächen 11, 22, 33, 44 um Achsrohrbereiche, die durch Eindrücken des ursprünglich runden Achsrohrmantels entstanden sind.

Die Stützflächen 11, 22 liegen eng beieinander und sind nur durch einen Eckenradius 71 voneinander getrennt. Sie sind im rechten Winkel zueinander angeordnet. Gleiches gilt für die beiden Stützflächen 33 und 44. Zwischen den Stützflächen 11 und 44 einerseits und 22 und 33 andererseits erstrecken sich bogenförmige Rohrwandungsabschnitte 73.

Des Weiteren lässt Fig. 6 erkennen, dass sich der erste Stützbereich 11 auf einem ersten Umfangssegment S1, der zweite Stützbereich 22 auf einem zweiten Umfangssegment S2, der dritte Stützbereich 33 auf einem dritten Umfangssegment S3 und der vierte Stützbereich 44 auf einem vierten Umfangssegment S4 des Rundrohrs befindet. Das erste Umfangssegment S1 ist auf einem dem dritten Umfangssegment S3 abgewandten Umfangsabschnitt des Rohrs, und das zweite Umfangssegment S2 ist auf einem dem vierten Umfangssegment S4 abgewandten Umfangsabschnitt angeordnet.

Zwischen dem Umfangssegment S1 und dem Umfangssegment S4, und ebenso zwischen dem Umfangssegment S2 und dem Umfangssegment S3 ist die Rohrwandung 72 nicht oder nur wenig im Vergleich zu der ursprünglichen Mantelfläche 70 verformt.

Die Figuren 7 und 8 zeigen im Vergleich zu den Figuren 5 und 6 eine stärkere Verformung des Achsrohrs im Befestigungsabschnitt 4. Die Verformung ist so stark, dass der Außendurchmesser auf dem Befestigungsabschnitt 4 über dessen gesamten Umfang geringer ist, als die Mantelfläche 70 und damit der Außendurchmesser auf den unverformten Rohrabschnitten.

Zur Erläuterung des Verformungsprozesses sind in Fig. 8 jene Bereiche der Rohrwandung 72 bezeichnet, an denen Verformungskräfte F auf die Rundrohrwandung einwirken.

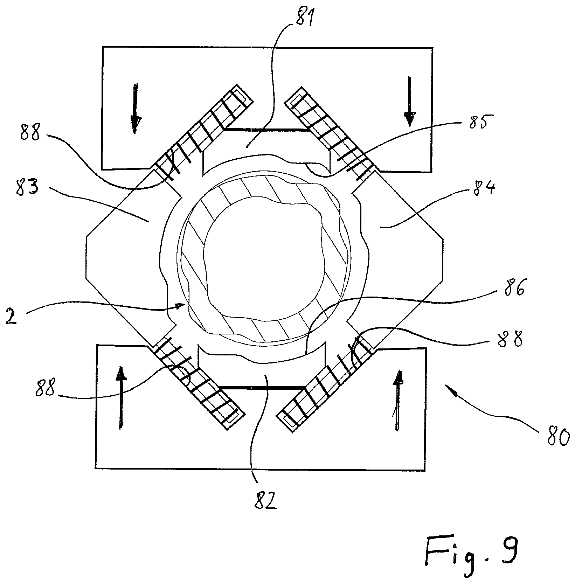

Gemäß Fig. 9 werden in einem mit vier aufeinander zu verfahrbaren Pressbacken ausgerüsteten Stauchwerkzeug vier Umfangsabschnitte der Rundrohrwandung nach innen eingedrückt und dabei dauerhaft verformt. Das Rundrohr 2 wird zunächst in ein Presswerkzeug 80 so eingelegt, dass jener Längsabschnitt des Rundrohrs, der später der Befestigungsabschnitt 4 sein soll, im Bereich der Druckflächen der Presswerkzeugs 80 angeordnet ist. Bestandteile des Presswerkzeugs 80 sind ein Ober- und ein Unterwerkzeug 81, 82, deren Druckflächen 85, 86 zueinander gerichtet sind, sowie zwei Seitenpresswangen 83, 84, deren Druckflächen ebenfalls zueinander gerichtet sind. Durch gleichzeitiges, also simultanes gegeneinander Fahren der zwei Druckflächen 85, 86 und der zwei Druckflächen der Seitenpresswangen 83, 84 wird der Rohrabschnitt geformt, bis der gewünschte Rohrquerschnitt erreicht ist. Die simultane Bewegung der Pressbacken lässt sich erreichen, indem das Ober- und Unterwerkzeug 81, 82 die Seitenpresswangen 83, 84 über schräge Kulissenflächen 88 antreibt. An den Enden der vier Werkzeuge können zusätzliche Druckflächen ausgebildet sein, welche während des Umformverfahrens die zwei Übergangsbereiche 90 (Fig. 5) vom Befestigungsabschnitt 4 auf die runden Rohrlängsabschnitte formen.

### Bezugszeichenliste

- 1: Fahrwerk
- 1A: Lenkerstütze
- 1B: Schwenklager
- 2: Rundrohr, Achskörper
- 4: Befestigungsabschnitt
- 5: Achslenker
- 6: Luftfeder
- 6A: Auflagefläche für Luftfeder
- 11: Stützfläche
- 22: Stützfläche
- 33: Stützfläche
- 41: Schale
- 42: Schale
- 44: Stützfläche
- 46: Innenseite
- 47: Innenseite
- 51: vorderer Lenkerabschnitt
- 52: hinterer Lenkerabschnitt
- 55: Gewindebügel
- 56: gebogener Bügelabschnitt
- 57: Zugelement
- 58: Mutter
- 59: Widerlager
- 61: Gegenstützfläche
- 62: Gegenstützfläche
- 63: Gegenstützfläche
- 64: Gegenstützfläche
- 70: Mantelfläche
- 71: Eckenradius
- 72: Rohrwandung
- 73: Rohrwandungsabschnitt
- 80: Presswerkzeug
- 81: Oberwerkzeug
- 82: Unterwerkzeug
- 83: Seitenpresswange
- 84: Seitenpresswange
- 85: Druckfläche
- 86: Druckfläche
- 88: Kulissenfläche
- 90: Übergangsbereich

- F: Verformungskraft
- S1: Umfangssegment
- S2: Umfangssegment
- S3: Umfangssegment
- S4: Umfangssegment
- W: Winkel

## Patentansprüche

1. Fahrwerk für ein Nutzfahrzeug mit einem Achskörper (2), der in einem Befestigungsabschnitt (4) mit einem Achslenker (5) verbunden ist, dessen eines Ende an dem Fahrzeugrahmen (1) des Nutzfahrzeugs schwenkbar gelagert, und dessen anderes Ende über eine Luftfeder (6) gegen den Fahrzeugrahmen (1) abgestützt ist, wobei der Achskörper (2) in seinem Befestigungsabschnitt (4) mit mindestens zwei Stützflächen (11, 22, 33, 44) versehen und mit diesen Stützflächen gegen den Achslenker (5) abgestützt ist, und der Achskörper im Wesentlichen als ein Rundrohr (2) ausgebildet ist, wobei jede Stützfläche (11, 22, 33, 44) eine Verformung der Rundrohrwandung (72) ist, **dadurch gekennzeichnet, dass** in Umfangsrichtung des Rundrohrs (2)
- eine erste Stützfläche (11) auf einem ersten Umfangssegment (S1) des Rundrohrs,
- eine zweite Stützfläche (22) auf einem zweiten Umfangssegment (S2) des Rundrohrs,
- eine dritte Stützfläche (33) auf einem dritten Umfangssegment (S3) des Rundrohrs,
- eine vierte Stützfläche (44) auf einem vierten Umfangssegment (S4) des Rundrohrs angeordnet sind, und wobei das erste und dritte Umfangssegment (11, 33) und das zweite und vierte Umfangssegment (22, 44) auf einander abgewandten Umfangsabschnitten angeordnet sind, wobei der Achslenker (5) zweigeteilt ist und sich aus einem in Fahrtrichtung vorderen (51) und einem in Fahrtrichtung hinteren (52) Lenkerabschnitt zusammensetzt, und dass die erste (11) und die vierte Stützfläche (44) ausschließlich gegen den einen der beiden Lenkerabschnitte, und die zweite (22) und die dritte (33) Stützfläche ausschließlich gegen den anderen der beiden Lenkerabschnitte abgestützt ist.

2. Fahrwerk nach Anspruch 1, **dadurch gekennzeichnet, dass** die erste (11) und die zweite (22) Stützfläche und die dritte (33) und die vierte (44) Stützfläche jeweils in Umfangsrichtung aufeinander folgen und im rechten Winkel (R) zueinander angeordnet sind.

3. Fahrwerk nach einem der Ansprüche 1 bis 2, **dadurch gekennzeichnet, dass** an den Lenkerabschnitten (51, 52) zur Anlage der Stützflächen (11, 22, 33, 44) Gegenstützflächen (61, 62, 63, 64) ausgebildet sind, die als in Achsrichtung sich erstreckende Leisten geformt sind.

4. Fahrwerk nach Anspruch 3, **dadurch gekennzeichnet, dass** die an jedem Lenkerabschnitt (51, 52) ausgebildeten Gegenstützflächen (61 und 64 bzw. 62 und 63) im rechten Winkel zueinander angeordnet sind.

5. Fahrwerk nach einem der vorangehenden Ansprüche, **dadurch gekennzeichnet, dass** der Achskörper (2) auf seinem Befestigungsabschnitt (4) eine andere Wanddicke aufweist, als auf den unverformten Rohrlängsabschnitten.

6. Fahrwerk nach einem der vorangehenden Ansprüche, **dadurch gekennzeichnet, dass** der Außendurchmesser des Achskörpers (2) auf dem Befestigungsabschnitt (4) über dessen gesamten Umfang geringer als der Außendurchmesser auf den unverformten Rohrlängsabschnitten.

7. Achskörper mit einem Befestigungsabschnitt (4) zur Verbindung des Achskörpers mit einem Achslenker eines Fahrwerks und insbesondere Nutzfahrzeugfahrwerk, wobei der Achskörper in dem Befestigungsabschnitt (4) mit mindestens zwei Stützbereichen (11, 22, 33, 44) versehen und mit diesen Stützbereichen gegen den Achslenker abstützbar ist, und der Achskörper im Wesentlichen als ein Rundrohr (2) ausgebildet ist, wobei jeder Stützbereich (11, 22, 33, 44) eine Verformung der Rundrohrwandung ist, **dadurch gekennzeichnet, dass** in Umfangsrichtung des Rundrohrs (2),
- eine erste Stützfläche (11) auf einem ersten Umfangssegment (S1) des Rundrohrs,
- eine zweite Stützfläche (22) auf einem zweiten Umfangssegment (S2) des Rundrohrs,
- eine dritte Stützfläche (33) auf einem dritten Umfangssegment (S3) des Rundrohrs,
- eine vierte Stützfläche (44) auf einem vierten Umfangssegment (S4) des Rundrohrs, angeordnet sind, und wobei das erste und dritte Umfangssegment (11, 33) und das zweite und vierte Umfangssegment (22, 44) auf einander abgewandten Umfangsabschnitten angeordnet sind.

8. Achskörper nach Anspruch 7, **dadurch gekennzeichnet, dass** die erste (11) und die zweite (22) Stützfläche und die dritte (33) und die vierte (44) Stützfläche jeweils in Umfangsrichtung aufeinander folgen und im rechten Winkel (R) zueinander angeordnet sind.

9. Achskörper nach einem der Ansprüche 7 bis 8, **dadurch gekennzeichnet, dass** der Achskörper (2) auf seinem Befestigungsabschnitt (4) eine andere Wanddicke aufweist, als auf den unverformten Rohrlängsabschnitten.

10. Achskörper nach einem der Ansprüche 7 bis 9, **dadurch gekennzeichnet, dass** der Außendurchmesser des Achskörpers (2) auf dem Befestigungsabschnitt (4) über dessen gesamten Umfang geringer als der Außendurchmesser auf den unverformten Rohrlängsabschnitten.

## Claims

1. Chassis for a commercial vehicle having an axle beam (2) which is connected in a fastening section (4) to an axle guide (5), the one end of which is mounted pivotably on the vehicle frame (1) of the commercial vehicle, and the other end of which is supported via an air spring (6) against the vehicle frame (1), the axle beam (2) being provided with at least two supporting faces (11, 22, 33, 44) in its fastening section (4), and being supported by way of the said supporting faces against the axle guide (5), and the axle beam being configured substantially as a round tube (2), each supporting face (11, 22, 33, 44) being a deformation of the round tube wall (72), **characterized in that**, in the circumferential direction of the round tube (2),
- a first supporting face (11) is arranged on a first circumferential segment (S1) of the round tube,
- a second supporting face (22) is arranged on a second circumferential segment (S2) of the round tube,
- a third supporting face (33) is arranged on a third circumferential segment (S3) of the round tube, and
- a fourth supporting face (44) is arranged on a fourth circumferential segment (S4) of the round tube,
and the first and third circumferential segment (11, 33) and the second and fourth circumferential segment (22, 44) being arranged on circumferential sections which face away from one another, the axle guide (5) being split in two and being composed of a front (in the driving direction) guide section (51) and a rear (in the driving direction) guide section (52), and **in that** the first supporting face (11) and the fourth supporting face (44) are supported exclusively against the one of the two guide sections, and the second supporting face (22) and the third supporting face (33) are supported exclusively against the other one of the two guide sections.

2. Chassis according to Claim 1, **characterized in that** the first (11) and the second (22) supporting face and the third (33) and the fourth (44) supporting face follow one another in each case in the circumferential direction, and are arranged at a right angle (R) with respect to one another.

3. Chassis according to either of Claims 1 and 2, **characterized in that** corresponding supporting faces (61, 62, 63, 64) which are formed as strips which extend in the axial direction are configured on the guide sections (51, 52) for contact of the supporting faces (11, 22, 33, 44).

4. Chassis according to Claim 3, **characterized in that** the corresponding supporting faces (61, 64 and 62, 63, respectively) which are configured on each guide section (51, 52) are arranged at a right angle with respect to one another.

5. Chassis according to one of the preceding claims, **characterized in that** the axle beam (2) has a different wall thickness on its fastening section (4) than on the non-deformed tube longitudinal sections.

6. Chassis according to one of the preceding claims, **characterized in that** the external diameter of the axle beam (2) on the fastening section (4) over its entire circumference is smaller than the external diameter on the non-deformed tube longitudinal sections.

7. Axle beam having a fastening section (4) for connecting the axle beam to an axle guide of a chassis and, in particular, commercial vehicle chassis, the axle beam being provided with at least two supporting regions (11, 22, 33, 44) in the fastening section (4), and being supportable by way of the said supporting regions against the axle guide, and the axle beam being configured substantially as a round tube (2), each supporting region (11, 22, 33, 44) being a deformation of the round tube wall, **characterized in that** in the circumferential direction of the round tube (2),
- a first supporting face (11) is arranged on a first circumferential segment (S1) of the round tube,
- a second supporting face (22) is arranged on a second circumferential segment (S2) of the round tube,
- a third supporting face (33) is arranged on a third circumferential segment (S3) of the round tube, and
- a fourth supporting face (44) is arranged on a fourth circumferential segment (S4) of the round tube,
and the first and third circumferential segment (11, 33) and the second and fourth circumferential segment (22, 44) being arranged on circumferential sections which face away from one another.

8. Axle beam according to Claim 7, **characterized in that** the first (11) and the second (22) supporting face and the third (33) and the fourth (44) supporting face follow one another in each case in the circumferential direction, and are arranged at a right angle (R) with respect to one another.

9. Axle beam according to either of Claims 7 and 8, **characterized in that** the axle beam (2) has a different wall thickness on its fastening section (4) than on the non-deformed tube longitudinal sections.

10. Axle beam according to one of Claims 7 to 9, **characterized in that** the external diameter of the axle beam (2) on the fastening section (4) over its entire circumference is smaller than the external diameter on the non-deformed tube longitudinal sections.

## Revendications

1. Train de roulement pour un véhicule utilitaire avec un corps d'essieu (2) qui est relié, dans une portion de fixation (4), avec un guide d'essieu (5), dont une extrémité est logée de manière pivotante au niveau du châssis (1) du véhicule utilitaire, et dont l'autre extrémité est soutenue par un ressort à air comprimé (6) contre le châssis (1), le corps d'essieu (2) étant muni, dans sa portion de fixation (4), d'au moins deux surfaces d'appui (11, 22, 33, 44) et étant appuyé, avec ces surfaces d'appui, contre le guide d'essieu (5) et le corps d'essieu étant conçu globalement comme un tube rond (2), chaque surface d'appui (11, 22, 33, 44) étant une déformation de la paroi du tube rond (72), **caractérisé en ce que**, dans la direction circonférentielle du tube rond (2) :
- une première surface d'appui (11) est disposée sur un premier segment de circonférence (S1) du tube rond,
- une deuxième surface d'appui (22) est disposée sur un deuxième segment de circonférence (S2) du tube rond,
- une troisième surface d'appui (33) est disposée sur un troisième segment de circonférence (S3) du tube rond,
- une quatrième surface d'appui (44) est disposée sur un quatrième segment de circonférence (S4) du tube rond,
et les premier et troisièmes segments de circonférence (11, 33) et les deuxième et quatrième segments de circonférence (22, 44) étant disposés sur des portions de circonférence opposées entre elles,
le guide d'essieu (5) étant divisé en deux parties et se composant d'une portion de guide avant (51) et d'une portion de guide arrière (52) dans la direction de la marche, et **en ce que** les première (11) et quatrième (44) surfaces d'appui sont appuyées exclusivement contre une des deux portions de guide et les deuxième (22) et troisième (33) surfaces d'appui sont appuyées exclusivement contre l'autre des deux portions de guide.

2. Train de roulement selon la revendication 1, **caractérisé en ce que** les première (11) et deuxième (22) surfaces d'appui et les troisième (33) et quatrième (44) surfaces d'appui respectivement se suivent entre elles dans la direction de la circonférence et sont disposées avec un angle droit (R) entre elles.

3. Train de roulement selon l'une des revendications 1 à 2, **caractérisé en ce que**, sur les portions de guide (51, 52), pour l'appui des surfaces d'appui (11, 22, 33, 44), sont prévues des contre-surfaces d'appui (61, 62, 63, 64) qui sont formées comme des barres s'étendant dans la direction axiale.

4. Train de roulement selon la revendication 3, **caractérisé en ce que** les contre-surfaces d'appui (61 et 64 ou 62 et 63) réalisées sur chaque portion de guide (51, 52) sont disposées avec un angle droit entre elles.

5. Train de roulement selon l'une des revendications précédentes, **caractérisé en ce que** le corps d'essieu (2) présente, sur sa portion de fixation (4) une épaisseur de paroi différente de l'épaisseur de paroi sur les portions longitudinales non déformées du tube.

6. Train de roulement selon l'une des revendications précédentes, **caractérisé en ce que** le diamètre extérieur du corps d'essieu (2) sur la portion de fixation (4) est inférieur, sur toute sa circonférence, au diamètre extérieur sur les portions longitudinales non déformées du tube.

7. Corps d'essieu avec une portion de fixation (4) pour la liaison du corps d'essieu avec un guide d'essieu d'un train de roulement et plus particulièrement d'un train de roulement de véhicule utilitaire, le corps d'essieu étant muni, dans la portion de fixation (4), d'au moins deux zones d'appui (11, 22, 33, 44) et pouvant être appuyé, avec ces zones d'appui, contre le guide d'essieu, et le corps d'essieu présentant globalement la forme d'un tube rond (2), chaque zone d'appui (11, 22, 33, 44) étant une déformation de la paroi du tube rond, **caractérisé en ce que**, dans la direction de la circonférence du tube rond (2) :
- une première surface d'appui (11) est disposée sur un premier segment de circonférence (S1) du tube rond,
- une deuxième surface d'appui (22) est disposée sur un deuxième segment de circonférence (S2) du tube rond,
- une troisième surface d'appui (33) est disposée sur un troisième segment de circonférence (S3) du tube rond,
- une quatrième surface d'appui (44) est disposée sur un quatrième segment de circonférence (S4) du tube rond,
et les premier et troisièmes segments de circonférence (11, 33) et les deuxième et quatrième segments de circonférence (22, 44) étant disposés sur des portions de circonférence opposées entre elles.

8. Corps d'essieu selon la revendication 7, **caractérisé en ce que** les première (11) et deuxième (22) surfaces d'appui et les troisième (33) et quatrième (44) surfaces d'appui respectivement se suivent entre elles dans la direction de la circonférence et sont disposées avec un angle droit (R) entre elles.

9. Corps d'essieu selon l'une des revendications 7 à 8, **caractérisé en ce que** le corps d'essieu (2) présente, sur sa portion de fixation (4) une épaisseur de paroi différente de l'épaisseur de paroi sur les portions longitudinales non déformées du tube.

10. Corps d'essieu selon l'une des revendications 7 à 9, **caractérisé en ce que** le diamètre extérieur du corps d'essieu (2) sur la portion de fixation (4) est inférieur, sur toute sa circonférence, au diamètre extérieur sur les portions longitudinales non déformées du tube.
